**Europäisches Patentamt**

**European Patent Office**

**Office européen des brevets**

(19)

(11) Veröffentlichungsnummer: **0 113 312**
**B1**

(12) **EUROPÄISCHE PATENTSCHRIFT**

(45) Veröffentlichungstag der Patentschrift:
06.08.86

(51) Int. Cl.⁴: **H 01 B 13/02**

(21) Anmeldenummer: **83730115.9**

(22) Anmeldetag: **17.11.83**

(54) **Rohrspeicher-SZ-Verseilmaschine.**

(30) Priorität: **25.11.82 DE 3243915**

(43) Veröffentlichungstag der Anmeldung:
**11.07.84 Patentblatt 84/28**

(45) Bekanntmachung des Hinweises auf die Patenterteilung:
**06.08.86 Patentblatt 86/32**

(84) Benannte Vertragsstaaten:
**CH DE FR GB IT LI**

(56) Entgegenhaltungen:
**EP - A - 0 066 800**
**DE - A - 1 465 550**

(73) Patentinhaber: **Siemens Aktiengesellschaft Berlin und München, Wittelsbacherplatz 2, D-8000 München 2 (DE)**

(72) Erfinder: **Vogelsberg, Dieter, Dipl.-Ing., Fichtestrasse 7, D-8630 Coburg (DE)**

ACTORUM AG

## Beschreibung

Die Erfindung liegt auf dem Gebiet der Verseiltechnik für elektrische und optische Kabel und ist bei einer Vorrichtung zum ceanderförmigen Aufbringen von Verseilelementen auf einen Kern, beispielsweise von Metalldrähten auf eine von einer Ader oder einer Verseilgruppe gebildete Seele eines elektrischen Kabels oder von optischen Adern und/oder strangförmigen Hilfselementen eines optischen Kabels auf ein Tragorgan, anzuwenden, um deren Arbeitsgeschwindigkeit zu erhöhen.

Bei der Herstellung von elektrischen Kabeln mit einem aus Einzeldrähten aufgebauten Schirm oder konzentrischen Leiter ist es seit langem üblich, die Metalldrähte aus fertigungs- und/oder montagetechnischen Gründen mit in kurzen Abständen wechselnder Schlagrichtung auf die aus einer Ader oder einer Verseilgruppe bestehende Kabelseele aufzubringen (DE-OS 1 540 432). Zur Herstellung eines solchen Ceander-Leiters (Siemens-Elektrodienst, Heft 2, 1966, Seiten 10 und 11) dient eine sinusförmig oszillierend umlaufende, die Metalldrähte führende Lochscheibe, die zusammen mit einem vorgeschalteten Führungsrohr zum Hindurchführen der Kabelseele und zur vorübergehenden Aufnahme der Schirmdrähte sowie mit einer am Anfang dieses Führungsrohres angeordneten feststehenden Lochscheibe eine sogenannte Rohrspeicher-SZ-Verseilmaschine bildet (DE-GM 6 608 174).

Der Betrieb einer solchen Maschine bringt insofern Schwierigkeiten mit sich, als die Metalldrähte im Bereich zwischen den beiden Lochscheiben periodischen Längenschwankungen unterworfen sind, die sich in Zugspannungsschwankungen bis in den der oszillierenden Lochscheibe unmittelbar nachgeschalteten Verseilnippel hinein auswirken. Der demzufolge begrenzten Arbeitsgeschwindigkeit der Maschine hat man durch eine Zugspannungsregelung für die Metalldrähte entgegenzuwirken versucht. Hierzu wurden zum Teil recht aufwendige Regelungsmassnahmen an den Ablaufspulen der Drähte oder auf dem Wege von den Ablaufspulen zur stillstehenden Lochscheibe vorgesehen (DE-OS 2 036 532, DE-OS 1 640 309).

Ein anderer Weg zur Beseitigung von Zugspannungsschwankungen sieht vor, zwischen der stillstehenden und der oszillierenden Lochscheibe eine weitere Lochscheibe anzuordnen, die phasenverschoben zur eigentlichen oszillierenden Lochscheibe oszilliert. Die Abstände der Lochscheiben untereinander können dabei veränderbar sein. Durch Anordnung einer vierten Lochscheibe soll es möglich sein, eine ungleichmässige Bewegung der Drähte zu kompensieren. Hierbei sind die Lochkranzdurchmesser der Lochscheiben möglichst klein gehalten (DE-GM 6 608 280).

Die bekannten Rohrspeicher-SZ-Verseilmaschinen können auch zur Herstellung optischer Kabel eingesetzt werden (DE-OS 3 122 473), wobei optische Adern und/oder strangförmige Hilfselemente auf ein Tragrohr aufgeseilt werden (DE-OS 3 108 381).

Ausgehend von einer Rohrspeicher-SZ-Verseilmaschine mit den Merkmalen des Oberbegriffes des Anspruches 1 liegt der Erfindung die Aufgabe zugrunde, diese Vorrichtung so auszugestalten, dass ohne Verwendung besonderer Steuer- oder Regelungseinrichtungen ein von störenden Zugspannungsschwankungen freies Aufbringen der Verseilelemente auf den Kern gewährleistet ist.

Diese Aufgabe lässt sich überraschend ohne besondere konstruktive Massnahmen im wesentlichen durch eine entsprechende Dimensionierung einzelner Bauteile der Rohrspeicher-SZ-Verseilmaschine lösen.

Gemäss der Erfindung ist nämlich vorgesehen, dass bei einem Teilkreisdurchmesser der Lochscheiben von höchstens dem 1,5fachen des Aussendurchmesser des Rohres der Abstand $l_0$ zwischen der stillstehenden und der am Ende des Rohres angeordneten oszillierenden Lochscheibe der Bedingung

$$l_0 \geqq 100 \, \frac{D^2}{b}$$

genügt, mit

D = Aussendurchmesser des zylindrischen Rohres
b = Periodenlänge der ceanderförmigen Verseilung der Verseilelemente.

Bei einer solchen Dimensionierung der Vorrichtung ist gewährleistet, dass die von Speicherinhaltsänderungen des Rohrspeichers verursachten Geschwindigkeitsschwankungen der Verseilelemente vernachlässigbar klein sind gegenüber denjenigen beherrschbaren Geschwindigkeitsänderungen, die durch das ceanderförmige Legen der Verseilelemente auf den Kern zu einer Verseillage bewirkt werden. Die von der wellenförmigen Geometrie der ceanderförmigen Verseillage herrührenden Geschwindigkeitsschwankungen haben einen nahezu sinusförmigen Zeitverlauf und sind erfahrungsgemäss dann unkritisch, wenn das Abziehen der Verseilelemente aus den Vorratsbehältern trägheitslos erfolgt, wie z.B. beim heute üblichen Entnehmen von Metalldrähten aus Fässern oder beim Überkopfablauf von Verseilelementen von Spulen oder Tellern.

Die durch Längenänderungen der Verseilelemente im Rohrspeichersystem verursachten Geschwindigkeitsschwankungen sind dagegen Zufallseinflüssen unterworfen wie Oberflächenreibkräften, Bremskraftunterschieden, geschwindigkeitsabhängigen Trägheitskräften usw. Sie können sprunghaft anwachsen, wenn auf dem Speicherrohr ein bestimmter Umschlingungswinkel überschritten wird. Um hohe Arbeitsgeschwindigkeiten zu erreichen, sind diese Geschwindigkeitsschwankungen soweit wie möglich zu verringern. Bei einer gemäss der Erfindung ausgebildeten Vorrichtung wird dies durch die Abstimmung von Rohrdurchmesser D, Lochscheibenabstand $l_0$ und Ceander-Periodenlänge b erreicht. Durch diese Abstimmung ist gewährleistet, dass die Verseilelemente auf dem Speicherrohr in Längsrichtung einen jederzeit nahezu gleichförmigen Steigungswinkel $\alpha$ aufweisen.

Wenn die am Ende des Rohres angeordnete Lochscheibe um mehr als $\pm 180°$ gegenüber ihrer Mittenlage oszilliert, kann die Einhaltung eines in Längsrichtung des Rohres konstant bleibenden Steigungswinkels $\alpha$ gefährdet sein, da die am Anfang des Rohres auf diesem aufliegenden Abschnitte der Verseilelemente über dem Einfluss von Reibkräften an einer Oszillationsbewegung gehindert werden. In Weiterbildung der Erfindung ist es dann vorteilhaft, auf der Strecke $l_0$ zwischen der stillstehenden Lochscheibe und der am Ende des Rohres angeordneten oszillierenden Lochscheibe eine oder mehrere weitere oszillierende Lochscheibe(n) anzuordnen, deren Drehzahl sich zur Drehzahl der am Ende des Rohres angeordneten oszillierenden Lochscheibe verhält wie der jeweilige Abstand der weiteren Lochscheibe von der stillstehenden Lochscheibe zur Strecke $l_0$.

Die notwendige Konstanz des Steigungswinkels $\alpha$ bei grösseren Drehwinkeln der oszillierenden Lochscheibe kann auch dadurch erreicht werden, dass man eine der oszillierenden Lochscheiben mit einer Rohrhülse starr verbindet, die das Rohr teilweise überdeckt. Beispielsweise kann eine auf halber Länge des Speicherrohres angeordnete oszillierende Lochscheibe mit einer Rohrhülse starr verbunden sein, die das Speicherrohr vor und hinter der Lochscheibe jeweils um ein Viertel der Länge des Speicherrohres überdeckt.

In einer bevorzugten Ausführung enthält die erfindungsgemässe Vorrichtung nur eine einzige oszillierende, am Ende des Rohres angeordnete Lochscheibe, die mit einer vom Rohrende bis etwa zur Rohrmitte reichenden Rohrhülse starr verbunden ist. Diese Rohrhülse überträgt dann die Drehbewegung der oszillierenden Lochscheibe durch Reibschluss bis in die Mitte des zylindrischen Rohres. Je nach Bremskräften, Reibungskräften usw. wählt man die Länge der Rohrhülsen so, dass sich für die aufliegenden Verseilelemente in Längsrichtung ein nahezu konstanter Steigungswinkel ergibt. Gegenüber einer Ausführung mit zusätzlichen oszillierenden Lochscheiben hat diese Ausführung den Vorzug, dass die Verseilelemente nicht durch zusätzliche Öffnungen gefädelt werden müssen.

Bei einer gemäss der Erfindung ausgebildeten Vorrichtung ist im allgemeinen gewährleistet, dass zwischen der oszillierenden Lochscheibe am Ende des Rohres und dem Verseilnippel keine Längenschwankungen der Verseilelemente auftreten. Um dies auch bei grossen Unterschieden zwischen dem Durchmesser der Kabelseele und dem Durchmesser des zylindrischen Rohres und damit bei grösseren Längen zwischen den Führungslöchern der oszillierenden Lochscheibe und dem Verseilnippel sicherzustellen, empfiehlt es sich, die oszillierende Lochscheibe in Richtung des Verseilnippels mit einer Verlängerung in Form einer Hilfslochscheibe zu versehen.

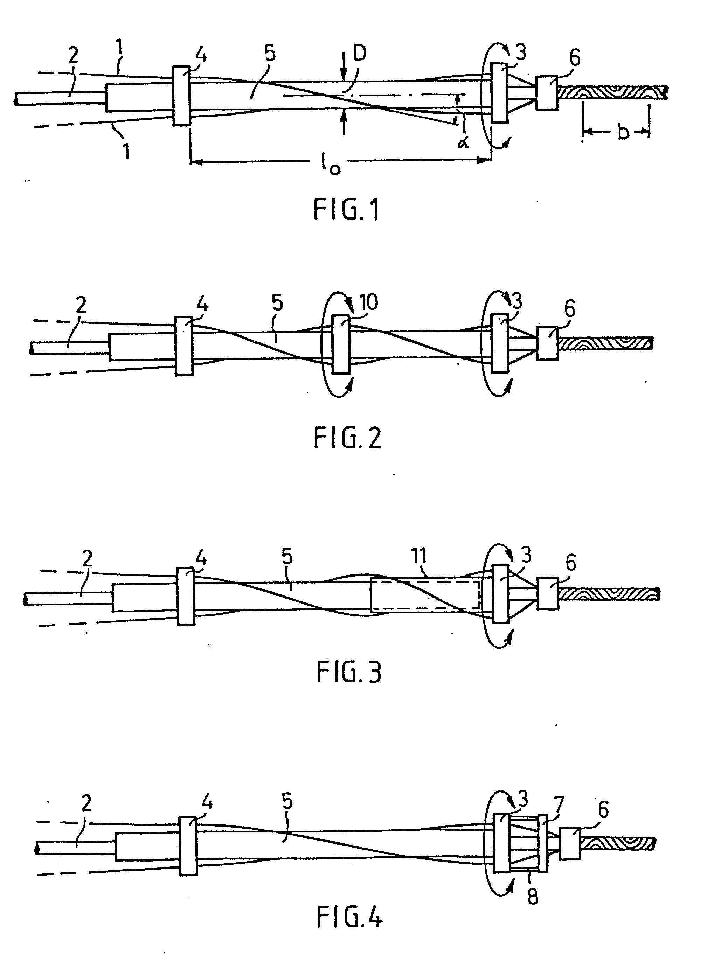

Vier Ausführungsbeispiele der neuen Vorrichtung sind in den Figuren 1 bis 4 dargestellt.

Fig. 1 zeigt in prinzipieller Darstellung eine Rohrspeicher-SZ-Verseilmaschine zum ceanderförmigen Aufbringen von Metalldrähten 1 auf eine Kabelseele 2. Hierzu ist eine oszillierende Lochscheibe 3 mit dem unmittelbar nachgeschalteten Verseilnippel 6 vorgesehen. Der oszillierenden Lochscheibe 3 ist ein zylindrisches Führungsrohr 5 vorgeschaltet, das stillstehend angeordnet ist und durch das die Kabelseele 2 hindurchläuft. Im Anfangsbereich des zylindrischen Rohres 5 befindet sich in einem Abstand $l_0$ zur oszillierenden Lochscheibe 3 die stillstehende Lochscheibe 4.

Die Metalldrähte 1 durchlaufen zunächst die auf einem Teilkreis angeordneten Löcher der Lochscheibe 4, wobei der Durchmesser dieses Teilkreises höchstens das 1,5fache des Durchmessers D des zylindrischen Rohres 5 beträgt. Für den Lochkreisdurchmesser der oszillierenden Lochscheibe 3 gilt die gleiche Bedingung. Dadurch ist gewährleistet, dass die Metalldrähte nahezu im ganzen Bereich zwischen den beiden Lochscheiben auf der Oberfläche des zylindrischen Rohres 5 aufliegen, wobei deren Steigungswinkel mit $\alpha$ bezeichnet ist.

Der Abstand $l_0$ zwischen der stillstehenden Lochscheibe 4 und der oszillierenden Lochscheibe 3 ist in Abhängigkeit von dem Durchmesser D des zylindrischen Rohres 5 sowie in Abhängigkeit von der Periodenlänge b der Ceander-Verseilung gemäss der Bedingung

$$l_0 \geqq 100 \cdot \frac{D^2}{b}$$

gewählt. Beispielsweise für Kabelseelen mit einem Durchmesser von 20 bis 50 mm wird zum Aufbringen eines Ceander-Schirmes mit einer Periodenlänge b = 200 bis 400 mm und einem Umschlingungswinkel von $\pm$ 180° ein Speicherrohr mit einem Aussendurchmesser D = 75 mm gewählt. Die Entfernung $l_0$ zwischen feststehender Lochscheibe 4 und oszillierender Lochscheibe 3 wird mit

$$l_0 = 3000 \text{ mm}$$

festgelegt. Um bei dieser grossen Länge des Rohres 5 mit Sicherheit einen näherungsweise jederzeit über die ganze Länge des Rohres konstanten Steigungswinkel $\alpha$ zu erzielen, kann man auf halber Länge des Rohres eine weitere Lochscheibe 10 anordnen, deren Drehzahl halb so gross ist wie die Drehzahl der oszillierenden Lochscheibe 3. Alle drei Lochscheiben haben einen Teilkreisdurchmesser von 90 mm. Ein Ausführungsbeispiel für diese Variante zeigt Fig. 2.

Bei der Variante gemäss Fig. 3 ist die oszillierende Lochscheibe 3 mit einer Rohrhülse 11 starr verbunden, die das Rohr 5 auf etwa 1/3 dessen Länge überdeckt. Die Rohrhülse 11, die mit der gleichen Drehzahl wie die Lochscheibe 3 auf dem Rohr 5 oszilliert, kann das Rohr 5 auch bis zur Hälfte seiner Länge zwischen den Lochscheiben 3 und 4 überdecken. Durch eine Reduzierung des Durchmessers des Rohres 5 im überdeckten Bereich lässt sich ein durchmessergleicher Übergang vom Rohr 5 auf die Rohrhülse 11 erreichen.

Gemäss Fig. 4 ist die oszillierende Lochscheibe 3 in Richtung auf den Verseilnippel 6 verlängert. Hierzu ist die Hilfslochscheibe 7 angeordnet, die über stabförmige Verbindungselemente 8 mit der Lochscheibe 3 verbunden ist und demzufolge synchron mit dieser Lochscheibe rotiert. Die Führungslöcher in der Hilfslochscheibe 7 für die einzelnen Metalldrähte liegen entsprechend dem Einlaufwinkel der Metalldrähte in den Verseilnippel 6 und entsprechend dem möglichst geringen Abstand der Hilfslochscheibe 7 vom Verseilnippel 6 auf einem wesentlich kleineren Teilkreisdurchmesser als die Führungslöcher der Lochscheibe 3.

Die Verseilvorrichtungen gemäss den Fig. 1 bis 4 können auch bei der Herstellung von optischen Kabeln eingesetzt werden, wenn es darum geht, die Verseilelemente eines optischen Kabels (optische Adern und/oder strangförmigen Hilfselemente) in einer oder mehreren Lagen auf einen Kern, insbesondere auf ein zugfestes Tragorgan, aufzuseilen.

## Patentansprüche

1. Vorrichtung zum ceanderförmigen Aufbringen von Verseilelementen (1) auf einen Kern (2), beispielsweise von Metalldrähten auf eine von einer Ader oder einer Verseilgruppe gebildeten Seele eines elektrischen Kabels oder von optischen Adern und/oder strangförmigen Hilfselementen eines optischen Kabels auf ein Tragorgan, bestehend aus einem feststehenden zylindrischen Rohr (5), durch welches der Kern (2) geführt wird, aus einer am Anfang und einer am Ende des Rohres (5) angeordneten, von den Verseilelementen (1) durchlaufenen Lochscheiben (4, 3) deren Teilkreisdurchmesser grösser ist als der Aussendurchmesser des Rohres (5), wobei die am Anfang des Rohres (5) angeordnete Lochscheibe (4) stillsteht und die am Ende des Rohres angeordnete Lochscheibe (3) mit einem Drehwinkel von höchstens ± 360° um das Rohr oszilliert, und aus einem der am Ende des Rohres 5 angeordneten oszillierenden Lochscheibe (3) unmittelbar nachgeordneten Verseilnippel (6), in dem die Verseilelemente (1) mittels der oszillierenden Lochscheibe (3) auf den Kern (2) aufgeseilt werden, dadurch gekennzeichnet, dass bei einem Teilkreisdurchmesser der Lochscheiben (3, 4) von höchstens dem 1,5fachen des Aussendurchmessers D des Rohres (5) der Abstand $l_o$ zwischen der stillstehenden (4) und der am Ende des Rohres (5) angeordneten oszillierenden Lochscheibe (3) der Bedingung

$$l_o \geqq 100 \frac{D^2}{b}$$

genügt, mit
D = Aussendurchmesser des zylindrischen Rohres
b = Periodenlänge der ceanderförmigen Verseilung der Verseilelemente.

2. Vorrichtung nach Anspruch 1, dadurch gekennzeichnet, dass auf der Strecke $l_o$ zwischen der stillstehenden Lochscheibe (4) und der am Ende des Rohres (5) angeordneten oszillierenden Lochscheibe (3) eine oder mehrere weitere oszillierende Lochscheiben (10) angeordnet sind, deren Teilkreisdurchmesser höchstens dem 1,5fachen des Aussendurchmessers (D) des Rohres (5) beträgt und deren Drehzahl sich zur Drehzahl der am Ende des Rohres angeordneten oszillierenden Lochscheibe (3) verhält wie der jeweilige Abstand der weiteren Lochscheibe (10) von der stillstehenden Lochscheibe (4) zur Strecke $l_o$.

3. Vorrichtung nach Anspruch 1, dadurch gekennzeichnet, dass eine der oszillierenden Lochscheiben (3, 10) mit einer Rohrhülse (11) starr verbunden ist, die das Rohr teilweise überdeckt.

4. Vorrichtung nach einem der Ansprüche 1 bis 3, dadurch gekennzeichnet, dass die am Ende des Rohres (5) angeordnete oszillierende Lochscheibe (3) in Richtung des Verseilnippels (6) mit einer Verlängerung in Form einer Hilfslochscheibe (7, 8) versehen ist.

## Claims

1. Apparatus for the ceander-form application of stranding elements (1) on to a core (2), for example, of metal wires on to a core of an electric cable formed by a wire or a group of stands, or of optical fibres and/or cord-like auxiliary elements of an optical cable on to a supporting element, said apparatus consisting of a stationary cylindrical tube (5), through which the core (2) is guided, perforated discs (4, 5), through which the stranding elements (1) pass, which are arranged at the beginning and at the end of the tube (5) and the pitch circle diameter of which is greater than the outer diameter of the tube (5), the perforated disc (4) arranged at the beginning of the tube (5) being stationary and the perforated disc (3) arranged at the end of the tube oscillating about the tube with an angle of rotation of at most ± 360°, and a stranding nipple (6) which directly follows the oscillating perforated disc (3) arranged at the end of the tube (5), the stranding elements (1) being stranded on to the core (2) by means of the oscillating perforated disc (3), characterised in that for a pitch circle diameter of the perforated discs (3, 4) of at most 1.5 times the outer diameter D of the tube (5), the distance $l_o$ between the stationary perforated disc (4) and the oscillating perforated disc (3) arranged at the end of the tube (5) meets the condition

$$l_o \geqq 100 \frac{D^2}{b}$$

where
D = outer diameter of the cylindrical tube
b = period length of the ceander-form stranding elements.

2. Apparatus as claimed in Claim 1, characterised in that on the section $l_o$ between the stationary perforated disc (4) and the oscillating perforated disc (3) arranged at the end of the tube (5), there are arranged one or more further oscillating perforated discs (10), whose pitch circle diameters are at most 1.5 times the outer diameter (D) of the tube (5) and whose rotational speed in each case is to the rotational speed of the oscillating perforated disc (3) arranged at the end of the tube, as the respective distance of the further perforated disc (10) from the stationary perforated disc (4) is to the distance $l_o$.

3. Apparatus as claimed in Claim 1, characterised in that one of the oscillating perforated discs (3, 10) is rigidly connected to a tubular sleeve (11) which partially covers the tube.

4. Apparatus as claimed in one of Claims 1 to 3, characterised in that the oscillating perforated disc (3) arranged at the end of the tube (5) is provided with an extension in the form of an auxiliary perforated disc (7, 8), in the direction of the stranding nipple (6).

## Revendications

1. Machine pour la disposition «en céandres» ou disposition concentrique en méandres d'éléments de câblage (1) sur un noyau (2), par exemple de fils métalliques sur une âme, formée par un conducteur ou un toron d'un câble électrique, ou de conducteurs optiques et/ou d'éléments auxiliaires en forme de cordons, d'un câble optique sur un organe porteur,

comprenant un tube cylindrique (5) disposé fixe, à travers lequel est guidé le noyau (2),

des disques perforés (4, 3) placés l'un au début et l'autre à la fin du tube (5) et traversés par les éléments de câblage (1), dont le cercle de trous traversés par les éléments de câblage possède un diamètre plus grand que le diamètre extérieur du tube (5), le disque perforé (4) placé au début du tube (5) étant stationnaire et le disque perforé (3) placé à la fin du tube oscillant autour du tube sur un angle de rotation de $\pm$ 360° au maximum, ainsi qu'une filière de cablage (6) disposée immédiatement à la suite du disque perforé oscillant (3) placé à la fin du tube (5), dans laquelle les éléments de câblage (1) sont câblés sur le noyau (2) au moyen du disque oscillant (3), caractérisée en ce que, avec un diamètre du cercle de trous des disques perforés (3, 4) de tout au plus 1,5 fois le diamètre extérieur D du tube (5), la distance $l_o$ entre le disque stationnaire (4) et le disque oscillant (3) à la fin du tube (5) satisfait la condition

$$l_o \geqq 100 \frac{D^2}{b}$$

où
D = diamètre extérieur du tube cylindrique
b = longueur de période de câblage «en céandres» des éléments de câblage.

2. Machine selon la revendication 1, caractérisée par la disposition, sur la distance $l_o$ entre le disque stationnaire (4) et le disque oscillant (3) placé à la fin du tube (5), d'un ou plusieurs disques perforés (10) supplémentaires, effectuant un mouvement oscillant, dont le diamètre du cercle des trous correspond tout au plus à 1,5 fois le diamètre extérieur (D) du tube (5) et dont la vitesse de rotation présente avec la vitesse de rotation du disque oscillant (3) placé à la fin du tube un rapport correspondant au rapport entre la distance du disque supplémentaire (10) concerné et le disque stationnaire (4) d'une part et la distance $l_o$ d'autre part.

3. Machine selon la revendication 1, caractérisée en ce qu'un des disques oscillants (3, 10) est relié rigidement à un manchon tubulaire (11) qui recouvre le tube partiellement.

4. Machine selon une des revendications 1 à 3, caractérisée en ce que le disque oscillant (3) placé à la fin du tube (5) est pourvu d'un prolongement sous forme d'un disque perforé auxiliaire (7, 8) en direction de la filière (6).

FIG.1

FIG.2

FIG.3

FIG.4